## Europäisches Patentamt
## European Patent Office
## Office européen des brevets

(11) Veröffentlichungsnummer: **0 423 437 A2**

# EUROPÄISCHE PATENTANMELDUNG

(21) Anmeldenummer: **90114086.3**

(51) Int. Cl.5: **G01M 11/00**

(22) Anmeldetag: **23.07.90**

(30) Priorität: **17.10.89 CH 3774/89**

(43) Veröffentlichungstag der Anmeldung:
**24.04.91 Patentblatt 91/17**

(84) Benannte Vertragsstaaten:
**CH DE FR GB LI SE**

(71) Anmelder: **Leica Aarau AG**
**Schachenallee 25**
**CH-5000 Aarau(CH)**

(72) Erfinder: **Meier, Dietrich, Dr.**
**Leimenstrasse 682**
**CH-5012 Niedererlinsbach(CH)**

(74) Vertreter: **Stamer, Harald, Dipl.-Phys.**
**c/o Wild Leitz GmbH Konzernstelle Patente**
**und Marken Ernst-Leitz-Strasse 30 Postfach**
**20 20**
**W-6330 Wetzlar(DE)**

(54) **Verfahren und Vorrichtung zum Prüfen optischer Fasern.**

(57) Zum Prüfen optischer Fasern (12) unter Messung der optischen Weglänge wird eine Vorrichtung mit einem Modulator (5) ausserhalb der Lichtquelle (1) vorgeschlagen, welcher die Amplitude des Messlichtstrahles moduliert. Durch zweimalige Modulation vor und nach Durchlaufen der Prüffaser (12) im Reflexionsverfahren mit einer bestimmten Folge von Modulationsfrequenzen findet man charakteristische Minima eines Detektionssignales, aus welchen auch bei Messung mit verschiedenen Instrumenten gleiche absolute Messresultate berechnet werden. Angegeben wird ferner ein Modulator, der in der Technologie der integrierten Optik ausführbar ist, sowie ein Verfahren unter Verwendung der Vorrichtung, welches auch bei Fasern mit Faserbrüchen anwendbar ist.

Fig. 1

EP 0 423 437 A2

## VERFAHREN UND VORRICHTUNG ZUM PRÜFEN OPTISCHER FASEN

Die Erfindung betrifft ein Verfahren und eine Vorrichtung zum Prüfen optischer Fasern unter Messung der optischen Weglänge mit Mitteln zur Erzeugung eines kollimierten Lichtstrahles, Mitteln zur Modulation des Lichtstrahles mit einer bestimmten Folge von Modulationsfrequenzen, Mitteln zur Ein- und Auskoppelung des modulierten Lichtstrahles in die bzw. aus der zu prüfenden optischen Faser und Mitteln zur Erzeugung und Auswahl von Modulationssignalen mit Modulationsfrequenzen aus der bestimmten Folge zum Betrieb der Modulationsmittel.

Die Prüfung optischer Fasern auf Länge, Längenänderung oder Bruch ist hauptsächlich dort notwendig, wo die Fasern fest installiert oder verlegt sind Dabei kann es sich um derartige Fasern zur Informationsübertragung handeln, aber auch zur Überwachung von Bauwerksdeformationen durch Prüfung der Länge von im Bauwerk zu diesem Zweck eingelegten Fasern. Bekannte elektrooptische Verfahren zur Längenmessung in optischen Fasern beruhen auf der Messung der Laufzeit von Lichtimpulsen in der Faser oder auf der Messung der Phasenverzögerung der Modulation eines kontinuierlich modulierten Lichtstrahles nach Durchlaufen der Faser. Mit Laufzeitmessung arbeitet das "Time Domain Reflectometer" HP 8145A der Firma Hewlett-Packard, wobei die Lichtimpulse am Ende der Faser reflektiert werden und die Zeit für zweimaligen Durchlauf gemessen wird. Für die Genauigkeit dieses Gerätes wird +/- 6m angegeben. Mit Phasenmessung arbeitet der Distomat DI4L der Firma Wild-Heerbrugg (Schweiz), wobei die Faser nur einmal vom Licht durchlaufen wird, d.h es sind zwei Anschlüsse zur Ein- und zur Auskoppelung erforderlich. Hierbei beträgt die Messgenauigkeit +/- 5 mm.

Zur Messung der Lichtgeschwindigkeit in Luft oder im Vakuum wurde von A.H.L. Fizeau schon 1846 die sogenannte Zahnradmethode vorgeschlagen. Bei dieser Abwandlung der oben genannten Phasenmessung wurde ursprünglich ein Lichtstrahl durch ein Zahnrad periodisch unterbrochen, dann zu einem Reflektor gesendet und schliesslich wieder am gleichen Zahnrad ein zweites mal periodisch unterbrochen. Aus der Drehzahl des Zahnrades im Falle einer Auslöschung des zurückgekehrten Lichtstrahles lässt sich dessen Laufzeit durch Vergleich mit der Laufzeit eines Zahnradzahnes bis zur nächstfolgenden Zahnlücke bestimmen. Moderne Messgeräte mit Fizeau-System verwenden anstelle des Zahnrades elektrooptische Kristalle als Modulator (U.S.-PS 3,424,531 P.L. Bender et al.) Dabei wird die elliptische Polarisation des Lichtstrahles periodisch verändert.

Für eine Längenmessung in optischen Fasern ergeben sich bei Verwendung der bekannten Fizeau-Systeme Probleme, weil die Polarisation des Lichtes in der Faser durch mechanische Beanspruchung verändert wird. Bekannte Systeme zur Temperaturkompensation von Kristallmodulatoren sind dann nicht mehr funktionsfähig, und Erschütterungen der Faser sind extrem störend, da bei Spannungsänderungen zu messende Signalminima mit interferometrischer Empfindlichkeit in Maxima übergehen. Bei den bekannten Phasenmesssystemen ist eine Messung in Reflexion nicht möglich, es sind daher zwei Foppelstellen mit je einer getrennten Optik erforderlich. Ausserdem sind diesen Systemen undefinierte Driften infolge von Kopplungen zwischen Sender- und Empfängerteil eigen, welche die Genauigkeit auf die oben genannten Werte (+/- 5mm) beschränken. Ein Nachteil der Laufzeitsysteme liegt in der beschränkten Genauigkeit (+/- 6 m). Auch bereiten unvermeidliche Lichtreflexe von den Faser-Roppelstellen Probleme, wenn sie nicht von den zu messenden Reflexen unterschieden werden können.

Aufgabe der Erfindung ist es, eine Vorrichtung zum Prüfen optischer Fasern anzugeben, welche eine verbesserte Genauigkeit und Stabilität aufweist und die genannten Probleme bekannter Systeme vermeidet.

Diese Aufgabe wird bei einer Vorrichtung zum Prüfen optischer Fasern der eingangs genannten Art dadurch gelöst, dass die Modulationsmittel die Amplitude des Lichtstrahles modulieren, dass Mittel vorhanden sind, welche den aus der zu prüfenden Faser ausgekoppelten modulierten Lichtstrahl ein zweites mal den Modulationsmitteln zuführen, ferner Detektionsmittel für den ein zweites mal modulierten Lichtstrahl zur Bestimmung derjenigen Modulationsfrequenzen aus der bestimmten Folge, bei deren Verwendung der vom Lichtstrahl zwischen seiner ersten und zweiten Modulation zurückgelegte optische Weg ein ganzzahliges Vielfaches der entsprechenden Modulationswellenlängen ist, sowie Mittel zur Berechnung der vom Lichtstrahl in der zu prüfenden Faser zurückgelegten Weglänge aus den mit den Detektionsmitteln bestimmten Modulationsfrequenzen.

Dabei ist zweckmässig die zu prüfende Faser am einen Ende mit einem Reflektor versehen, und der modulierte Lichtstrahl ist am anderen Ende ein- und ausgekoppelt und durchläuft die Faser zweimal.

Die Detektionsmittel können einen photoelektrischen Empfänger umfassen und die Modulationsmittel umfassen: einen ersten polarisierenden Strahlenteiler, einen elektrooptischen Kristall und einen zweiten polarisierenden Strahlenteiler, wobei der kollimierte Lichtstrahl, ausgehend von den Mitteln zu seiner Erzeugung nacheinander durchläuft: den ersten polarisierenden Strahlenteiler, den elektrooptischen Kristall in einer ersten Richtung, den zweiten polarisierenden Strahlenteiler, die zu prüfende Faser, den zweiten polarisierenden Strahlenteiler, den elektrooptischen Kristall entgegen der ersten Richtung und den ersten polarisierenden Strahlenteiler und dann den photoelektrischen Empfänger erreicht.

Die Modulationsmittel können auch einen elektrooptisch schaltbaren Richtkoppler mit vier optischen Anschlüssen umfassen, von denen je einer angeschlossen ist an: die Mittel zur Erzeugung des kollimierten Lichtstrahles, an die zu prüfende optische Faser, an den photoelektrischen Empfänger und an eine reflexionsfreie Last, wobei der kollimierte Lichtstrahl wechselweise an die zu prüfende Faser oder an die reflexionsfreie Last und die zu prüfende Faser wechselweise an den photoelektrischen Empfänger oder an die Quelle des Lichtstrahles koppelbar ist.

Weitere Varianten der erfindungsgemässen Vorrichtung und das erfindungsgemässe Verfahren sind Gegenstand der Unteransprüche.

Die Erfindung wird nachfolgend anhand von in den Zeichnungen schematisch dargestellten Ausführungsbeispielen näher beschrieben. Es zeigen:

Fig. 1 den optischen und mechanischen Aufbau einer erfindungsgemässen Vorrichtung zum Prüfen optischer Fasern mit einem Modulatorkristall zwischen zwei Polarisationsteilern,

Fig. 2 den optischen und mechanischen Aufbau einer erfindungsgemässen Vorrichtung zum Prüfen optischer Fasern mit einem schaltbaren Richtkoppler als Modulator,

Fig. 3 den elektrischen Aufbau der Vorrichtung gemäss Fig. 1,

Fig. 4 den elektrischen Aufbau der Vorrichtung gemäss Fig. 2 und

Fig. 5 den elektrischen Aufbau einer Vorspannungsregelung eines Modulators gemäss Fig. 3.

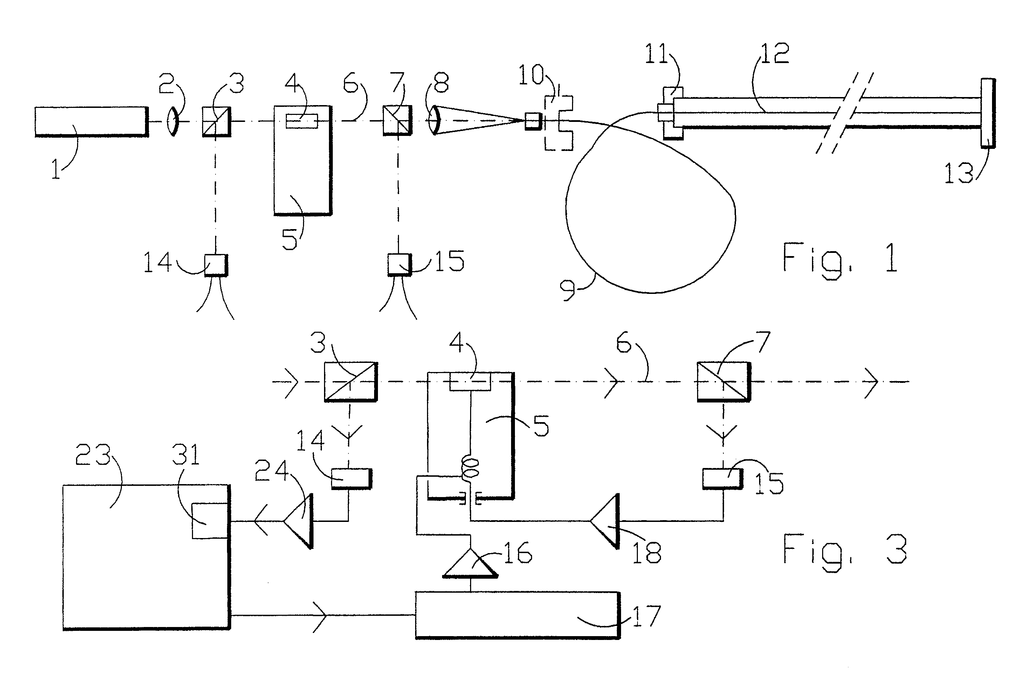

Der parallele Strahl eines He-Ne-Lasers 1 gelangt, wie in Fig. 1 gezeigt, über eine erste Fokussierlinse 2 auf einen ersten polarisierenden Strahlenteiler 3. Der geradlinig durchgehende Strahlanteil ist linear polarisiert und durchsetzt einen elektrooptischen Modulatorkristall 4, der sich im Leitungsresonator eines Modulators 5 befindet. Die Brennweite der Fokussierlinse 2 ist so bemessen, dass der Strahldurchmesser im Modulatorkristall 4 möglichst klein ist. Der nun in seiner elliptischen Polarisation modulierte Laserstrahl 6 durchläuft einen zweiten polarisierenden Strahlenteiler 7 und eine zweite Fokussierlinse 8, welche ihn auf die Stirnfläche eines flexiblen Faser-Zwischenstückes 9 fokussiert. Das Faser-Zwischenstück 9 kann zusammen mit weiteren Faser-Zwischenstücken in einem mit unterbrochenen Linien dargestellten Multiplexer 10 montiert sein zur Umschaltung auf je eine von mehreren zu prüfenden Fasern. Das Zwischenstück 9 ist im Vergleich zur zu prüfenden Faser kurz und ist mit seinem anderen Ende über einen justierbaren Stecker 11 an eine zu prüfende Faser 12 angekoppelt. Der Kerndurchmesser der Faser-Zwischenstücke 9 muss dem Ferndurchmesser der jeweiligen Prüffaser 12 entsprechen. Am Ende der zu prüfenden Faser 12 ist ein Spiegel 13 angeordnet, welcher den Laserstrahl durch die Fasern 12 und 9 wieder zurücklaufen lässt. Der Spiegel 13 ist entweder auf das Ende der Faser 12 chemisch aufgesilbert, oder es ist ein auf die planpolierte Stirnfläche der Faser 12 aufgebrachter, vorderseitig metallisierter Glas-Spiegel. Auf seinem Rückweg läuft der Laserstrahl wieder über den Strahlenteiler 7, den Modulatorkristall 4 und den Strahlenteiler 3, von dem geeignet polarisierte Strahlkomponenten auf einen ersten photoelektrischen Empfänger 14 als Detektionsmittel abgeteilt werden.

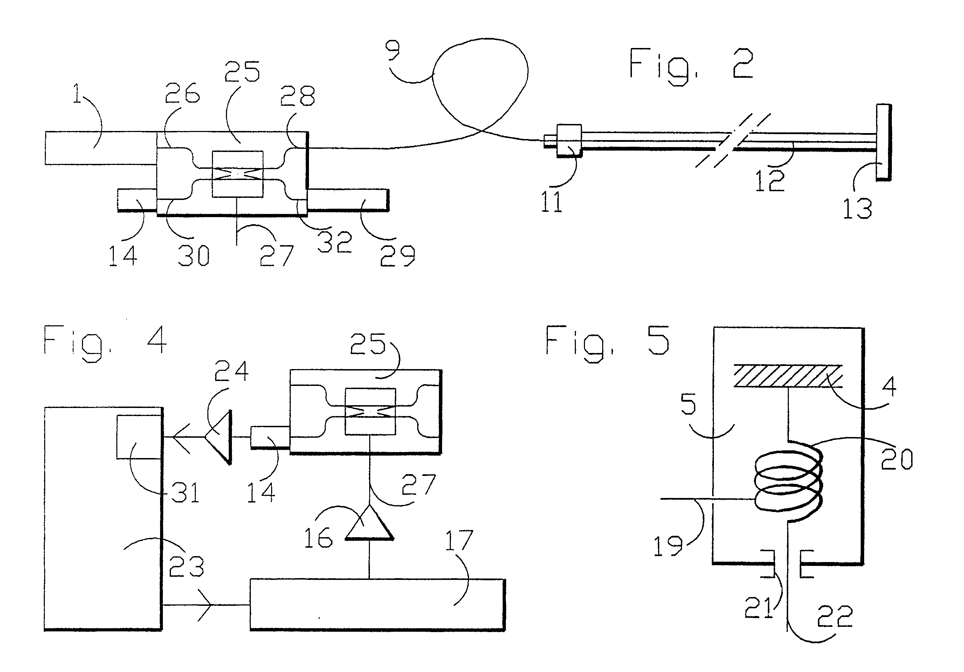

Die Durchlassrichtungen der polarisierenden Strahlenteiler 3 und 7 stehen zueinander gekreuzt. Ohne die Wirkung des Modulators 5 gelangt deshalb der Strahl vom Laser 1 garnicht auf die Prüffaser 12, sondern er wird am Strahlenteiler 7 auf einen zweiten photoelektrischen Empfänger 15 abgelenkt, dessen Ausgangssignale zur Kontrolle und zur Regelung des Modulationsgrades des Lichtstrahles 6 dienen. Der Modulatorkristall 4 ist ein Lithium-Tantalat-Kristall, der von einer Mikrowellenquelle 17 über einen Treiber-Verstärker 16 mit einem Modulationssignal variabler und einstellbarer Frequenz beaufschlagt wird, wie dies in Fig. 3 schematisch gezeigt ist.

Hat das periodische Modulationssignal z.B. eine Frequenz von 1,5 GHz, so entsteht nach je 2/3 ns eine elliptisch polarisierte Modulationswelle von 20 cm Länge, welche vom polarisierenden Strahlenteiler 7 durchgelassen wird und als amplitudenmodulierte Welle auf die Prüffaser 12 läuft. Gleichzeitig läuft eine zweite, gegenüber der durchgelassenen im Gegentakt befindliche Welle vom Teiler 7 auf den Kontrollempfänger 15. Beträgt die von der Welle durchlaufene optische Länge der Fasern 9, 12 und des Luftweges vom Ausgang des Modulatorkristalles 4 an gerechnet, also die doppelte Faserlänge, gerade ein ganzzahliges Vielfaches der Modulationswellenlänge 20 cm, so haben am Kristallausgang der auslaufende und der zurückkehrende Laserstrahl 6 zu jedem Zeitpunkt die gleichen Modulationszustände. Die zurückkehrende Komponente des Strahles wird dann vom Kristall 4 demoduliert, sodass am Photoempfänger 14 ein Helligkeitsminimum auftritt.

Weil der optimale Modulations-Arbeitspunkt beim verwendeten LiTaO₃-Kristall stark temperaturabhängig ist, sieht das Ausführungsbeispiel Modulation und Demodulation an ein und demselben Kristall 4 vor. Ausserdem dient der Modulationsgrad des Ausgangssignales des Kontrollempfängers 15 nach Umsetzung in ein DG-Signal und Verstärkung an einem Steuerverstärker 18 zur temperaturabhängigen Regelung des Modulators 5. Dabei wird die Temperaturkompensation des Kristalles 4 entweder durch eine direkte Temperaturregelung oder durch eine Kompensation mittels eines zusätzlicheh elektrischen Feldes am Kristall 4 durch eine Vorspannungsregelung erreicht, wie sie in Fig. 5 gezeigt ist. Das hochfrequente Modulationssignal vom Treiber-Verstärker 16 gelangt über den Eingang 19 des Modulators 5 auf eine Anzapfung einer Koppelspule 20, welche es mit ihrem einen Ende dem Modulatorkristall 4 zuführt. Das andere Ende der Spule 20 ist über einen Hochfrequenz-Kurzschlusskondensator 21 an den Eingang 22 des Modulators 5 geführt, an welchen die DG-Regelvorspannung vom Steuerverstärker 18 angeschlossen ist.

Mittels eines Controllers 23 ist an der Mikrowellenquelle 17 eine bestimmte Folge von Modulationsfrequenzen einstellbar. Als Mikrowellenquelle 17 eignet sich ein Frequenz-Synthesizer mit Quarz als Frequenznormal. Verändert man damit die Frequenz am Modulatorkristall 4, so ist das Verhältnis von Messstreckenlänge zu Modulationswellenlänge, anders als im oben beschriebenen Fall, nicht mehr ganzzahlig. Die Helligkeit am Photoempfänger 14 zeigt in Abhängigkeit von der Modulationsfrequenz einen periodischen Verlauf mit Maxima und ausgeprägten Minima. Das diesen Helligkeitsschwankungen entsprechende Ausgangssignal des Photoempfängers 14 ist über einen Verstärker 24 und einen A/D-Wandler 31 dem Controller 23 zugeführt und wird von diesem aus zum Auffinden der Signalminima ausgewertet.

Mit dem Controller 23 wird also eine Folge steigender oder fallender Frequenzen nacheinander eingestellt. Dabei wird jeder eingestellten Frequenz noch eine Frequenzmodulation (Wobble) z.B. im 1 kHz-Rythmus mit +/- 100 kHz Frequenzhub aufgeprägt. Auf diese Weise wertet man den genannten periodischen Signalverlauf am Photoempfänger 14 durch Abtasten in zwei um +/- 100 kHz frequenzbenachbarten Detektionskanälen 5 und 55 aus.

Beim oben erwähnten Fall, dass die Länge der Messtrecke gerade ein ganzzahliges Vielfaches der Modulationswellenlänge ist, beträgt die Laufzeit T des Lichtes vom Modulator 5 bis zum Spiegel 13 und zurück gerade ein ganzzahliges Vielfaches g der Modulationsperiode $t = 2/3$ ns, also $T = g^*t$. Dabei ist aber der Zahlenwert von g noch unbekannt. Diese Mehrdeutigkeit wird in an sich bekanner Weise dadurch behoben, dass man für zwei oder mehrere aufeinanderfolgende Minima des Signalverlaufes am Photoempfänger 14 die Modulationsfrequenzen bzw. Modulationsperioden t bestimmt. Trat für das Vielfache g das Minimum bei der Modulationsperiode t(g) auf und für das n.-te darauffolgende Vielfache (g + n) bei der Modulationsperiode t(g + n), so ist in jedem Falle die Laufzeit $T = g^*t (g) = (g + n)^* t (g + n)$. Daraus erhält man durch Umrechnung das gesuchte Vielfache $g = t (g + n) / (t (g) - t (g + n))$. Die Laufzeit ist dann $T = g^*t(g)$ und die doppelt durchlaufene Messtrecke $L = (1/2)^*c^*T$, wobei die Lichtgeschwindigkeit c in bekannter Weise von der Brechzahl der zu prüfenden optischen Faser abhängt. Die beschriebenen Berechnungen nebst Korrekturen bezüglich Faserbrechzahl, Verbindungs-Zwischenstücke 9 etc. können in an sich bekannter Art mit einem, im Controller 23 enthaltenen Mikrocomputer erfolgen.

In Fig. 2 ist eine andere Ausführungsform der erfindungsgemässen Prüfvorrichtung gezeigt, welche mit einem schaltbaren Richtkoppler 25 als Modulator arbeitet. Derartige Richtkoppler lassen sich in der Technologie der integrierten Optik mit geringen räumlichen Abmessungen ausführen. In Fig. 2 sind die der Fig. 1 entsprechenden Elemente mit den entsprechenden Bezugszeichen bezeichnet. Der kollimierte Strahl des Lasers 1 gelangt über einen ersten Eingang 26 in den über einen Steuereingang 27 elektrisch schaltbaren Richtkoppler 25. Dieser Laserstrahl kann entweder auf den Messausgang 28 geschaltet werden, an den das flexible Faser-Zwischenstück 9 angeschlossen ist, oder über einen Ausgang 32 auf eine reflexionsfreie Last 29. Je nach Schaltzustand ist dann der von der Prüffaser 12 zurückkommende Strahl auf den am Ausgang 30 angeschlossenen photoelektrischen Empfänger 14 oder auf den Ausgang 26 zurückgeschaltet.

Wie ersichtlich, erreicht man auch mit diesem Aufbau wie im Beispiel gemäss Fig. 1 eine Amplitudenmodulation des Laserstrahles im GHz-Bereich. Wie der elektrische Aufbau gemäss Fig. 4 zeigt, entfällt hierbei eine Temperaturkompensation. Das Ausgangssignal des Empfängers 14 gelangt über den Verstärker 24 in den Controller 23, wo es in einem A/D-Wandler 31 in ein digitales Format umgesetzt wird. Die Signalauswertung erfolgt dann wie schon oben im Zusammenhang mit Fig. 1 und Fig. 2 beschrieben.

Mit erfindungsgemässen Vorrichtungen lassen sich nicht nur Faserlängen von mit einem Spiegel 13 abgeschlossenen Fasern 12 prüfen. Gemäss dem erfindungsgemässen Verfahren lassen sich solche Vorrichtungen auch verwenden, um z.B. im Falle von Faserbrüchen bei unwirksamem Spiegel 13 die Faserlänge bis zur Bruchstelle abzuschätzen. In solchen Fällen hat sich gezeigt, dass reflektierte Strahlanteile immer noch ausreichen, um aus auf einem Kathodenstrahloszillografen visuell dargestellten Ausgangssignalen des photoelektrischen Empfängers 14 den Frequenzabstand von Signalminima und daraus die Faserlänge bis zur Reflexionsstelle abzuschätzen.

Wie oben beschrieben, ergeben sich die gesuchten Minima des Ausgangssignales des Photoempfängers 14 immer dann, wenn das Verhältnis von Messtreckenlänge zu Modulationswellenlänge ganzzahlig ist. Weicht die Modulationswellenlänge geringfügig von einem derartigen Wert ab, so ist der Phasenunterschied von auslaufender und zurückkehrender Modulationsphase am Ausgang des Modulatorkristalles 4, d.h. die Abweichung vom Signalminimum des Empfängers 14, umso grösser, je grösser die Länge der Prüffaser 12 ist, weil sich die Abweichungen der Modulationswellenlänge längs der Prüffaserlänge aufsummieren. Bei kurzen Prüffaserlängen oder bei Reflexen von den nahe dem Modulator 5 Gelegenen Koppelstellen zu den Faser-Zwischenstücken 9 lassen sich daher die Signalminima nur bei grossen Abweichungen der Modulationswellenlänge, d.h. bei grossem Frequenzhub des oben erwähnten Frequenz-Wobbel ausmessen. Das bedeutet aber gleichzeitig, dass beim Messen grösserer Faserlängen unvermeidliche Reflexe von den Koppelstellen, anders als bei den eingangs erwähnten bekannten Systemen, nicht stören, weil diese Reflexe von den Detektionsmitteln in diesem Fall gar nicht gesehen werden.

Ein weiterer Vorteil der erfindungsgemässen Vorrichtungen liegt darin, dass infolge der Modulation des Messtrahles ausserhalb seiner Quelle 1 in einfacher Weise verschiedene, unterschiedlichen Anwendungsfällen angepasste Lichtquellen einsetzbar sind. Quellen mit grösserer Leistung für grosse Faserlängen oder solche für sichtbares Licht für Justierzwecke sind einfach austauschbar. Damit auch kürzere Fasern von z.B. 3 m Länge gemessen werden können, lassen sich problemlos Modulationsfrequenzen von ca. 1,5 GHz einsetzen. Für normal lange Fasern mit n*D bis zu 100 m (n Brechzahl des Fasermaterials, D geometrische Faserlänge) sollte dann zur absoluten Distanzbestimmung die Auswertung zweier benachbarter Signalminima genügen. Dabei kann dann für den Modulator gemäss Fig. 1 ein schmalbandiger Resonator verwendet werden, sofern die zu messende Faser länger als etwa 5 m ist. Solche Modulatoren haben einen geringen Leistungsbedarf und sind billig in der Herstellung.

## Ansprüche

1. Vorrichtung zum Prüfen optischer Fasern unter Messung der optischen Weglänge mit Mitteln (1) zur Erzeugung eines kollimierten Lichtstrahles, Mitteln (3, 4, 5, 7, 25) zur Modulation des Lichtstrahles mit einer bestimmten Folge von Modulationsfrequenzen, Mitteln (9, 10, 11) zur Ein- und Auskoppelung des modulierten Lichtstrahles in die bzw. aus der zu prüfenden optischen Faser (12) und Mitteln (17, 23) zur Erzeugung und Auswahl von Modulationssignalen mit Modulationsfrequenzen aus der bestimmten Folge zum Betrieb der Modulationsmittel (3, 4, 5, 7, 25) dadurch gekennzeichnet , dass die Modulationsmittel (3, 4, 5, 7, 25) die Amplitude des Lichtstrahles modulieren, dass Mittel (8, 9) vorhanden sind, welche den aus der zu prüfenden Faser (12) ausgekoppelten modulierten Lichtstrahl ein zweites mal den Modulationsmitteln (3, 4, 5, 7, 25) zuführen, ferner Detektionsmittel (14, 23, 24, 31) für den ein zweites mal modulierten Lichtstrahl zur Bestimmung derjenigen Modulationsfrequenzen aus der bestimmten Folge, bei deren Verwendung der vom Lichtstrahl zwischen seiner ersten und zweiten Modulation zurückgelegte optische Weg ein ganzzahliges Vielfaches der entsprechenden Modulationswellenlängen ist, sowie Mittel (23) zur Berechnung der vom Lichtstrahl in der zu prüfenden Faser (12) zurückgelegten Weglänge aus den mit den Detektionsmitteln (14, 23, 24, 31) bestimmten Modulationsfrequenzen.

2. Vorrichtung nach Anspruch 1, dadurch gekennzeichnet , dass die zu prüfende Faser (12) am einen Ende mit einem Reflektor (13) versehen ist und dass der modulierte Lichtstrahl am anderen Ende ein- und ausgekoppelt ist und die Faser (12) zweimal durchläuft.

3. Vorrichtung nach Anspruch 2, dadurch gekennzeichnet , dass die Detektionsmittel einen photoelektrischen Empfänger (14) umfassen und dass die Modulationsmittel umfassen: einen ersten polarisierenden Strahlenteiler (3), einen elektrooptischen Kristall (4) und einen zweiten polarisierenden Strahlenteiler (7), wobei der kollimierte Lichtstrahl, ausgehend von den Mitteln (1) zu seiner Erzeugung nacheinander durchläuft: den ersten polarisierenden Strahlenteiler (3), den elektrooptischen Kristall (4) in einer ersten Richtung, den zweiten polarisierenden Strahlenteiler (7), die zu prüfende Faser (12) den zweiten polarisierenden Strahlenteiler (7), den elektrooptischen Kristall (4) entgegen der ersten Richtung und den ersten polarisierenden Strahlenteiler (3) und dann den photoelektrischen Empfänger (14) erreicht.

4. Vorrichtung nach Anspruch 3, gekennzeichnet durch einen Regelkreis (15, 18, 20, 21) welcher den elektrooptischen Kristall (4) derart beeinflusst, dass der Modulationsgrad des amplitudenmodulierten kollimierten Lichtstrahles am Ausgang des zweiten polarisierenden Strahlenteilers (7) optimal ist.

5. Vorrichtung nach Anspruch 4, dadurch gekennzeichnet , dass der Regelkreis einen photoelektrischen Empfänger (15) umfasst, welcher mit einem, am zweiten polarisierenden Strahlenteiler (7) abgeleiteten Teil des modulierten Lichtstrahles beaufschlagt ist und dass aus dem Modulationsgrad des Ausgangssignales dieses photoelektrischen Empfängers (15) ein Regelsignal abgeleitet ist, welches über die Temperatur des elektrooptischen Kristalles (4) den Modulationsgrad des Lichtstrahles steuert.

6. Vorrichtung nach Anspruch 4, dadurch gekennzeichnet , dass der Regelkreis einen photoelektrischen Empfänger (15) umfasst, welcher mit einem, am zweiten polarisierenden Strahlenteiler (7) abgeleiteten Teil des modulierten Lichtstrahles beaufschlagt ist und dass aus dem Modulationsgrad des Ausgangssignales dieses photoelektrischen Empfängers (15) ein Regelsignal abgeleitet ist, welches über eine DC-Vorspannung (22) des elektrooptischen Kristalles (4) den Modulationsgrad des Lichtstrahles steuert.

7. Vorrichtung nach Anspruch 2, dadurch gekennzeichnet , dass die Detektionsmittel einen photoelektrischen Empfänger (14) umfassen und dass die Modulationsmittel einen elektrooptisch schaltbaren Richtkoppler (25) mit vier optischen Anschlüssen (26, 28, 30, 32) umfassen, von denen je einer angeschlossen ist an: die Mittel (1) zur Erzeugung des kollimierten Lichtstrahles, an die zu prüfende optische Faser (12) , an den photoelektrischen Empfänger (14) und an eine reflexionsfreie Last (29) , wobei der kollimierte Lichtstrahl wechselweise an die zu prüfende Faser (12) oder an die reflexionsfreie Last (29) und die zu prüfende Faser (12) wechselweise an den photoelektrischen Empfänger (14) oder an die Quelle (1) des Lichtstrahles koppelbar ist.

8. Vorrichtung nach Anspruch 7, dadurch gekennzeichnet , dass der elektrooptisch schaltbare Richtkoppler (25) in der Technologie der integrierten Optik ausgeführt ist.

9. Vorrichtung nach einem der Ansprüche 2 bis 8, dadurch gekennzeichnet , dass der kollimierte modulierte Lichtstrahl von den Modulationsmitteln (3, 4, 5, 7, 25) auf die zu prüfende optische Faser (12) und umgekehrt durch flexible Faser-Zwischenstükke (9) von gegenüber der Faser (12) kurzer Länge gekoppelt ist, deren Kerndurchmesser dem der zu prüfenden Faser (12) entspricht.

10. Vorrichtung nach Anspruch 9, gekennzeichnet durch Mittel (10) zur Umschaltung des kollimierten modulierten Lichtstrahles von den Modulationsmitteln (3, 4, 5, 7, 25) auf je eine von mehreren zu prüfenden optischen Fasern (12).

11. Vorrichtung nach Anspruch 2, dadurch gekennzeichnet , dass der Reflektor (13) am einen Faserende ein auf die planpolierte Stirnfläche aufgebrachter, vorderseitig metallisierter Glas-Spiegel oder ein chemisch aufgesilberter Spiegel ist.

12. Vorrichtung nach Anspruch 1, dadurch gekennzeichnet , dass die bestimmte Folge von Modulationsfrequenzen im Bereich von 1,5 GHz liegt.

13. Verfahren zum Prüfen optischer Fasern (12) unter Verwendung der Vorrichtung nach Anspruch 3 oder 7, dadurch gekennzeichnet , dass mit den Mitteln (17, 23) zur Erzeugung und Auswahl der Modulationssignale die bestimmte Folge von Modulationsfrequenzen periodisch durchlaufen wird, dass die Ausgangssignale des photoelektrischen Empfängers (14) der Detektionsmittel in Abhängigkeit von der Modulationsfrequenz mittels eines Kathodenstrahloszillografen visuell dargestellt werden und dass aus dem Frequenzabstand von Extremwerten der Ausgangssignale die Faserlänge bis zu einer Reflexionsstelle oder Bruchstelle abgeschätzt wird.

Fig. 1

Fig. 3

EP 0 423 437 A2

Fig. 2

Fig. 4

Fig. 5

EP 0 423 437 A2